# EUROPEAN PATENT APPLICATION

(11) **EP 4 712 610 A1**
(43) Date of publication of application: **18.03.2026**
(21) Application number: 24806381.0
(22) Date of filing: 06.05.2024
(51) Int. Cl.: H04W 64/00

(54) **COMMUNICATION METHOD FOR USER-PLANE POSITIONING CONNECTION, AND TERMINAL AND NETWORK-SIDE DEVICE**

(30) Priority: 12.05.2023 CN 202310542742
(71) Applicant: Vivo Mobile Communication Co., Ltd., Dongguan, Guangdong 523863 (CN)
(72) Inventor: YU, Hang, Dongguan, Guangdong 523863 (CN)
(74) Representative: Germain Maureau
(86) International application number: PCT/CN2024/091120
(87) International publication number: WO 2024/235025

(57) **Abstract**

Embodiments of this application relate to the field of communication technologies, and disclose a communication method for a user-plane positioning connection, a terminal, and a network-side device. The communication method for a user-plane positioning connection in embodiments of this application includes: A terminal sends a first message. The first message is related to a user-plane positioning connection. The first message is a service request message, or the first message is an uplink non-access stratum transmission message. The uplink non-access stratum transmission message includes an LCS-UP payload.

## Description

### CROSS-REFERENCE TO RELATED APPLICATIONS

This application claims priority to Chinese patent application No. 2023105427426, filed with the China National Intellectual Property Administration on May 12, 2023 and entitled "COMMUNICATION METHOD FOR USER-PLANE POSITIONING CONNECTION, TERMINAL, AND NETWORK-SIDE DEVICE", which is incorporated herein by reference in its entirety.

### TECHNICAL FIELD

This application relates to the field of communication technologies, and in particular, to a communication method for a user-plane positioning connection, a terminal, and a network-side device.

### BACKGROUND

The introduction of a user-plane positioning connection is being discussed in related technologies. Two manners of initiating the user-plane positioning connection, namely, a network-initiated user-plane positioning connection and a terminal-initiated user-plane positioning connection (Network-initiated LCS-UP initiation, UE-initiated LCS-UP initiation), are currently supported. However, it is not determined how to transmit a message related to the user-plane positioning connection currently, which affects communication performance related to the user-plane positioning connection.

### SUMMARY

Embodiments of this application provide a communication method for a user-plane positioning connection, a terminal, and a network-side device, to resolve a problem that communication performance related to a user-plane positioning connection is affected because how to transmit a message related to the user-plane positioning connection cannot be determined.

According to a first aspect, a communication method for a user-plane positioning connection is provided, including: A terminal sends a first message. The first message is related to a user-plane positioning connection. The first message is a service request message, or the first message is an uplink non-access stratum transmission message. The uplink non-access stratum transmission message includes an LCS-UP payload.

According to a second aspect, a communication method for a user-plane positioning connection is provided, including: a terminal receives a third message. The third message is related to a user-plane positioning connection. The third message is a downlink non-access stratum transmission message, and the downlink non-access stratum transmission message includes an LCS-UP payload.

According to a third aspect, a communication method for a user-plane positioning connection is provided, including: a network-side device receives a first message. The first message is related to a user-plane positioning connection. The first message is a service request message, or the first message is an uplink non-access stratum transmission message. The uplink non-access stratum transmission message includes an LCS-UP payload.

According to a fourth aspect, a communication method for a user-plane positioning connection is provided, including: a network-side device sends a third message. The third message is related to a user-plane positioning connection. The third message is a downlink non-access stratum transmission message, and the downlink non-access stratum transmission message includes an LCS-UP payload.

According to a fifth aspect, a communication apparatus for a user-plane positioning connection is provided, including a sending module configured to send a first message. The first message is related to a user-plane positioning connection. The first message is a service request message, or the first message is an uplink non-access stratum transmission message. The uplink non-access stratum transmission message includes an LCS-UP payload.

According to a sixth aspect, a communication apparatus for a user-plane positioning connection is provided, including a receiving module configured to receive a third message. The third message is related to a user-plane positioning connection. The third message is a downlink non-access stratum transmission message, and the downlink non-access stratum transmission message includes an LCS-UP payload.

According to a seventh aspect, a communication apparatus for a user-plane positioning connection is provided, including a receiving module configured to receive a first message. The first message is related to a user-plane positioning connection. The first message is a service request message, or the first message is an uplink non-access stratum transmission message. The uplink non-access stratum transmission message includes an LCS-UP payload.

According to an eighth aspect, a communication apparatus for a user-plane positioning connection is provided, including a sending module configured to send a third message. The third message is related to a user-plane positioning connection. The third message is a downlink non-access stratum transmission message, and the downlink non-access stratum transmission message includes an LCS-UP payload.

According to a ninth aspect, a terminal is provided. The terminal includes a processor and a memory. The memory stores a program or an instruction executable in the processor. The program or the instruction, when executed by the processor, implements the steps of the method in the first aspect or the second aspect.

According to a tenth aspect, a terminal is provided, including a processor and a communication interface. The communication interface is configured to send a first message. The first message is related to a user-plane positioning connection. The first message is a service request message, or the first message is an uplink non-access stratum transmission message. The uplink non-access stratum transmission message includes an LCS-UP payload. Alternatively, the communication interface is configured to receive a third message. The third message is related to a user-plane positioning connection. The third message is a downlink non-access stratum transmission message, and the downlink non-access stratum transmission message includes an LCS-UP payload.

According to an eleventh aspect, a network-side device is provided. The network-side device includes a processor and a memory. The memory stores a program or an instruction executable in the processor. The program or the instruction, when executed by the processor, implements the steps of the method in the third aspect or the fourth aspect.

According to a twelfth aspect, a network-side device is provided, including a processor and a communication interface. The communication interface is configured to receive a first message. The first message is related to a user-plane positioning connection. The first message is a service request message, or the first message is an uplink non-access stratum transmission message. The uplink non-access stratum transmission message includes an LCS-UP payload. Alternatively, the communication interface is configured to send a third message. The third message is related to a user-plane positioning connection. The third message is a downlink non-access stratum transmission message, and the downlink non-access stratum transmission message includes an LCS-UP payload.

According to a thirteenth aspect, a readable storage medium is provided. The readable storage medium stores a program or an instruction. The program or the instruction, when executed by a processor, implements the steps of the method in any one of the first aspect to the fourth aspect.

According to a fourteenth aspect, a wireless communication system is provided, including a terminal and a network-side device. The terminal may be configured to perform the steps of the method in the first aspect, and the network-side device may be configured to perform the steps of the method in the third aspect. Alternatively, the terminal may be configured to perform the steps of the method in the second aspect, and the network-side device may be configured to perform the steps of the method in the fourth aspect.

According to a fifteenth aspect, a chip is provided. The chip includes a processor and a communication interface. The communication interface is coupled to the processor. The processor is configured to execute a program or an instruction, to implement the steps of the method in any one of the first aspect to the fourth aspect.

According to a sixteenth aspect, a computer program/program product is provided. The computer program/program product is stored in a storage medium. The computer program/program product is executed by at least one processor to implement steps of the method in any one of the first aspect to the fourth aspect.

In embodiments of this application, the terminal may send the service request message or send the uplink non-access stratum transmission message carrying the LCS-UP payload, to implement transmission of a message related to the user-plane positioning connection, and further implement the user-plane positioning connection establishment, the user-plane positioning connection modification, the user-plane positioning connection cancellation, or the like, thereby improving communication performance related to the user-plane positioning connection.

### BRIEF DESCRIPTION OF THE DRAWINGS

FIG. 1 is a schematic diagram of a wireless communication system according to an embodiment of this application;
FIG. 2 is a schematic flowchart of a communication method for a user-plane positioning connection according to an embodiment of this application;
FIG. 3 is a schematic flowchart of a communication method for a user-plane positioning connection according to an embodiment of this application;
FIG. 4 is a schematic flowchart of a communication method for a user-plane positioning connection according to an embodiment of this application;
FIG. 5 is a schematic flowchart of a communication method for a user-plane positioning connection according to an embodiment of this application;
FIG. 6 is a schematic flowchart of a communication method for a user-plane positioning connection according to an embodiment of this application;
FIG. 7 is a schematic flowchart of a communication method for a user-plane positioning connection according to an embodiment of this application;
FIG. 8 is a schematic flowchart of a communication method for a user-plane positioning connection according to an embodiment of this application;
FIG. 9 is a schematic structural diagram of a communication apparatus for a user-plane positioning connection according to an embodiment of this application;
FIG. 10 is a schematic structural diagram of a communication apparatus for a user-plane positioning connection according to an embodiment of this application;
FIG. 11 is a schematic structural diagram of a communication apparatus for a user-plane positioning connection according to an embodiment of this application;
FIG. 12 is a schematic structural diagram of a communication apparatus for a user-plane positioning connection according to an embodiment of this application;
FIG. 13 is a schematic structural diagram of a communication device according to an embodiment of this application;
FIG. 14 is a schematic structural diagram of a terminal according to an embodiment of this application; and
FIG. 15 is a schematic structural diagram of a network-side device according to an embodiment of this application.

### DETAILED DESCRIPTION

Technical solutions in embodiments of this application are clearly described below with reference to the accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in this application are used to distinguish between similar objects rather than describe a specific order or sequence. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, "or" in this application indicates at least one of connected objects. For example, "A or B" covers three solutions. Namely, solution one: including A and excluding B; solution two: including B and excluding A; and solution three: including both A and B. A character "/" generally indicates an "or" relationship between associated objects.

A term "indication" in this application may be a direct indication (or an explicit indication) or an indirect indication (or an implicit indication). The direct instruction may be understood as that a sending party clearly informs a receiving party of specific information, an operation to be performed, or a request result in the sent instruction. The indirect indication may be understood as that the receiving party determines corresponding information based on an indication sent by the sending party, or makes a determination and determines, based on a determining result, an operation that needs to be performed or a request result.

It should be noted that the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. Terms "system" and "network" in embodiments of this application are usually interchangeably used, and the described technology may be used for both the system and the radio technology mentioned above, or may be used for another system and another radio technology. A new radio (New Radio, NR) system is described below as an example, and the term NR is used in most of the following description. Nevertheless, the technologies may also be applied to a system other than the NR system, such as a 6^{th} generation (6^{th} Generation, 6G) communication system.

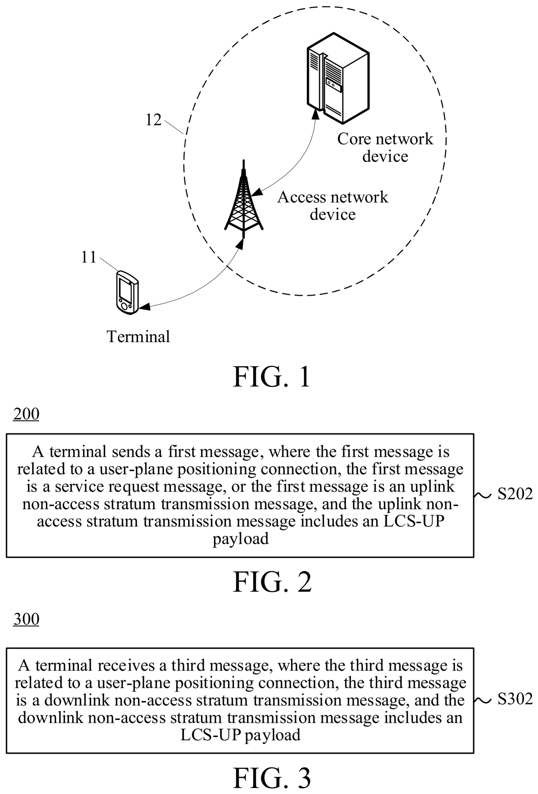

FIG. 1 is a block diagram showing a wireless communication system to which an embodiment of this application may be applied. The wireless communication system includes terminals 11 and a network-side device 12. The terminal 11 may be a terminal side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR), a virtual reality (Virtual Reality, VR) device, a robot, a wearable device (Wearable Device), a flight vehicle (flight vehicle), an on-board device (Vehicle User Equipment, VUE), a shipborne device, a pedestrian terminal (Pedestrian User Equipment, PUE), a smart home appliance (a home device with a wireless communication capability, such as a refrigerator, a television, a washing machine, or furniture), a game console, a personal computer (Personal Computer, PC), a teller machine, or a self-service machine. The wearable device includes: a smart watch, a smart bracelet, a smart headset, smart glasses, smart jewelry (a smart wristlet, a smart chain bracelet, a smart ring, a smart necklace, a smart ankle, a smart ankle chain, and the like), a smart wristband, smart clothing, and the like. The on-board device may also be referred to as an on-board terminal, an on-board controller, an on-board module, an on-board component, an on-board chip, an on-board unit, or the like. It should be noted that a specific type of the terminal 11 is not limited in embodiments of this application. The network-side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission receiving point (Transmission Reception Point, TRP), or another appropriate term in the art. The base station is not limited to a specific technical term, as long as the same technical effect can be achieved. It should be noted that, in this embodiment of this application, only a base station in an NR system is used as an example for description, and a specific type of the base station is not limited.

The core network device may include the core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in embodiments of this application, only a core network device in the NR system is used as an example, and a specific type of the core network device is not limited. However, the core network device may is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in embodiments of this application, only a core network device in the NR system is used as an example, and a specific type of the core network device is not limited.

A communication method for a user-plane positioning connection provided in embodiments of this application is described below in detail through some embodiments and application scenarios with reference to the accompanying drawings.

As shown in FIG. 2, an embodiment of this application provides a communication method for a user-plane positioning connection 200. The method may be performed by a terminal. In other words, the method may be performed by software or hardware installed in the terminal. The method includes the following steps.

S202: The terminal sends a first message, where the first message is related to a user-plane positioning connection, the first message is a service request (service request) message, or the first message is an uplink non-access stratum transmission (UL NAS TRANSPORT) message, and the uplink non-access stratum transmission message includes a location service over user plane (LoCation Service-User Plane, LCS-UP) payload.

In this embodiment, the terminal may send the service request message, to implement terminal-initiated user-plane positioning connection establishment (UE-initiated LCS-UP initiation). Certainly, sending of the service request message by the terminal may not only implement functions such as the user-plane positioning connection establishment (LCS-UP initiation), but also implement functions such as a user-plane positioning connection modification (LCS-UP modification) and a user-plane positioning connection cancellation (LCS-UP cancellation).

In this embodiment, the terminal may further send the uplink non-access stratum transmission message. The uplink non-access stratum transmission message includes the LCS-UP payload, to implement a network-initiated user-plane positioning connection establishment (Network-initiated LCS-UP initiation). Certainly, sending of the uplink non-access stratum transmission message by the terminal not only can implement the user-plane positioning connection establishment, but also can implement functions such as the user-plane positioning connection modification and the user-plane positioning connection cancellation.

Two cases in which the terminal sends the service request message (Case I) or sends the uplink non-access stratum transmission message (Case II) are described below.

Case I: The first message sent by the terminal is the service request message. This case corresponds to Embodiment I below.

Optionally, the service request message includes a terminal request type information element (UE request type IE). The terminal request type information element is configured to represent that the service request message is used to establish the user-plane positioning connection, or is referred to as being used to establish the user-plane positioning connection. In another embodiment, the terminal request type information element may further be configured to a user-plane positioning connection modification, the user-plane positioning connection cancellation, or the like.

Optionally, the terminal request type information element is configured to indicate an LCS-UP type, and the LCS-UP type includes at least one of the following: an LCS-UP connection establishment request, an LCS-UP connection establishment response, and LCS-UP connection establishment reject. In this example, the service request message sent by the terminal includes a terminal request type information element that may be the LCS-UP connection establishment request, and the terminal sends the service request message to implement the terminal-initiated user-plane positioning connection establishment (UE-initiated LCS-UP initiation).

Optionally, after the terminal sends the first message, the method further includes: The terminal receives a second message, where the second message includes a service acceptance message or a service reject message. The service acceptance message includes LCS-UP connection information, and the LCS-UP connection information represents attribute information of the user-plane positioning connection or carries a material for establishing the user-plane positioning connection. The service reject message includes at least one of the following: 1) a 5GMM cause information element, where the 5GMM cause information element includes a cause value, and the cause value is used to indicate an LCS-UP connection establishment failure (LCS-UP connection initiation failed); and 2) a fallback time information element, where the fallback time information element is configured to indicate a waiting time, and the waiting time is used to indicate that a terminal is allowed to initiate an LCS-UP connection establishment request message after the waiting time.

The LCS-UP connection information mentioned in embodiments of this application may include at least one of the following: 1) an emergency indicator, 2) a type, where the type includes terminal initiation, network initiation, or third-party initiation, 3) a source address, where an expression form includes an IPv4, an IPv6, an IPv4v6, and a DNN (Data Network Name), 4) a destination address, where an expression form includes an IPv4, an IPv6, an IPv4v6, and a DNN (Data Network Name), 5) safety-related information, including a key, a certificate, an algorithm identifier, and the like used to establish a connection, 6) an expected connection duration, 7) an effective duration, which indicates an actual allowed duration of the user-plane positioning connection, and differs from the expected duration as follows: the information indicates an actual and effective duration; and 8) a slice, a representation form of which is an NSSAI, and includes one or more S-NSSAI, 9) a PDU session identifier, where a form of expression is a PDU session ID, 10) a reject cause value, where the reject cause value is used to indicate a reason why the LCS-UP connection is rejected, or 11) a waiting timer, where the waiting timer is configured to instruct the terminal to initiate a request for initiating a user-plane positioning connection again after the terminal waits for a period of time.

The LCS-UP connection information included in the foregoing service acceptance message may include: the emergency indicator, the source address, the destination address, the safety-related information, the expected connection duration, the effective duration, the slice, the PDU session identifier, and the like. The information generally does not include the reject cause value and the waiting timer.

Case II: The first message sent by the terminal is the uplink non-access stratum transmission (UL NAS TRANSPORT) message. This case corresponds to Embodiment III below.

In the standard, a payload container information element transmitted through the non-access stratum transmission (NAS TRANSPORT) message is transparent to an access and mobility management function (Access and Mobility Management Function, AMF). In other words, the AMF does not care what content is carried in the payload container information element, and the AMF is merely responsible for forwarding the payload container information element to a network element or a UE. However, for the terminal-initiated user-plane positioning connection establishment (UE-initiated LCS-UP initiation), the AMF needs to decapsulate the uplink non-access stratum transmission message and select an appropriate location management function (Location Management Function, LMF) for the user-plane positioning connection. This operation may not satisfy a message function of a conventional NAS TRANSPORT.

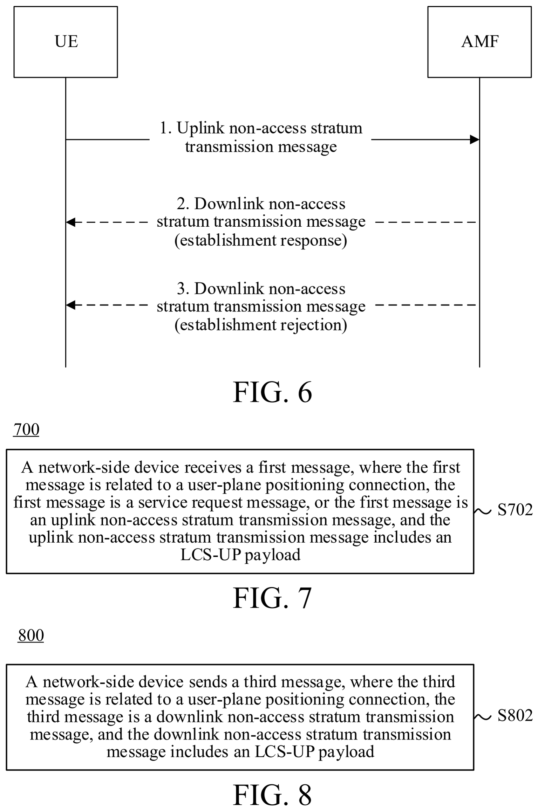

In this embodiment, the terminal-initiated user-plane positioning connection establishment (UE-initiated LCS-UP initiation) is implemented through the uplink non-access stratum transmission (UL NAS TRANSPORT) message. Certainly, a corresponding improvement also exists on a subsequent AMF side. For an action performed on the AMF side, reference is made to Embodiment III below or an embodiment of FIG. 7. In addition, this embodiment also provides that content of the establishment request is encapsulated in the non-access stratum transmission message, but is not encapsulated in the payload container information element. In this way, a logic of processing the NAS TRANSPORT by the AMF is satisfied, and a problem of establishing the user-plane positioning connection is resolved.

Optionally, the LCS-UP payload included in the uplink non-access stratum transmission message includes a message type. The message type indicates one of the following: an establishment request; an establishment response; establishment reject; a modification request; modification complete; modification reject; a cancellation request; cancellation complete; and cancellation reject. In this embodiment, for the terminal-initiated user-plane positioning connection establishment, a message type encapsulated by the LCS-UP payload is the establishment request. In another embodiment, the message type encapsulated by the LCS-UP payload may be the foregoing another type.

Optionally, in an embodiment, the first message (the uplink non-access stratum transmission message) further includes first indication information, and the first indication information is used to indicate that the first message carries information for establishing the user-plane positioning connection.

Optionally, in an embodiment, the LCS-UP payload (LCS-UP payload) includes a header (Header) and a body (Body). Before the terminal sends the first message, the method further includes: The terminal sets a message type field of the header of the LCS-UP payload to a first type, where the first type is used to indicate one of the following: an establishment request; an establishment response; establishment reject; a modification request; modification complete; modification reject; a cancellation request; cancellation complete; and cancellation reject; encapsulates the LCS-UP connection information in the body of the LCS-UP payload; and encapsulates the LCS-UP payload in a payload container information element or the first message, namely, the uplink non-access stratum transmission message.

Optionally, in an embodiment, the first indication information is included in a payload container type information element (Payload container type information element).

Optionally, in an embodiment, after the terminal sends the uplink non-access stratum transmission message, the method further includes: The terminal receives a downlink non-access stratum transmission message (DL NAS TRANSPORT), where the downlink non-access stratum transmission message includes an LCS-UP payload, and the LCS-UP payload may be placed inside an existing payload container information element or may be placed outside an existing payload container information element.

According to the communication method for a user-plane positioning connection provided in this embodiment of this application, the terminal may send the service request message or send the uplink non-access stratum transmission message carrying the LCS-UP payload, to implement transmission of a message related to the user-plane positioning connection, and further implement the user-plane positioning connection establishment, the user-plane positioning connection modification, the user-plane positioning connection cancellation, or the like, thereby improving communication performance related to the user-plane positioning connection.

As shown in FIG. 3, an embodiment of this application further provides a communication method for a user-plane positioning connection 300. The method may be performed by a terminal. In other words, the method may be performed by software or hardware installed in the terminal. The method includes the following steps.

S302: The terminal receives a third message, where the third message is related to a user-plane positioning connection, the third message is a downlink non-access stratum transmission message, and the downlink non-access stratum transmission message includes an LCS-UP payload.

For a detailed introduction of this embodiment, reference may be made to Embodiment II below.

According to the communication method for a user-plane positioning connection provided in this embodiment of this application, the terminal may receive a downlink non-access stratum transmission message carrying an LCS-UP payload, to implement transmission of a message related to the user-plane positioning connection, and further implement the user-plane positioning connection establishment, the user-plane positioning connection modification, the user-plane positioning connection cancellation, or the like, thereby improving communication performance related to the user-plane positioning connection.

Optionally, in an embodiment, the LCS-UP payload includes a message type. The message type indicates one of the following: an establishment request; an establishment response; establishment reject; a modification request; modification complete; modification reject; a cancellation request; cancellation complete; and cancellation reject.

Optionally, in an embodiment, the third message further includes first indication information, and the first indication information is used to indicate that the third message carries information for establishing the user-plane positioning connection.

Optionally, in an embodiment, the method further includes: The terminal sends a fourth message, where the fourth message includes an establishment response message or an establishment reject message. The establishment response message includes at least one of the following: 1) first indication information, where the first indication information is used to indicate that the establishment response message carries information for establishing the user-plane positioning connection; and 2) an LCS-UP payload, where a type of a message encapsulated by the LCS-UP payload is an establishment response, and the establishment reject message includes at least one of the following: 1) the first indication information, where the first indication information is used to indicate that the establishment reject message carries information for establishing the user-plane positioning connection; and 2) the LCS-UP payload, where a type of a message encapsulated by the LCS-UP payload is establishment reject.

Optionally, in an embodiment, when the fourth message is the establishment response message, the method further includes: The terminal sets the message type field of the header of the LCS-UP payload to an establishment response; and encapsulates the LCS-UP connection information in a body of the LCS-UP payload; and encapsulates the LCS-UP payload in the payload container information element or the fourth message. Alternatively, when the fourth message is the establishment reject message, the method further includes: The terminal sets the message type field of the header of the LCS-UP payload to establishment reject; and encapsulates the LCS-UP connection information in a body of the LCS-UP payload; and encapsulates the LCS-UP payload in the payload container information element or the fourth message.

To describe the communication method for a user-plane positioning connection provided in embodiments of this application in detail, a description is provided below in combination with a plurality of specific embodiments.

### Embodiment I

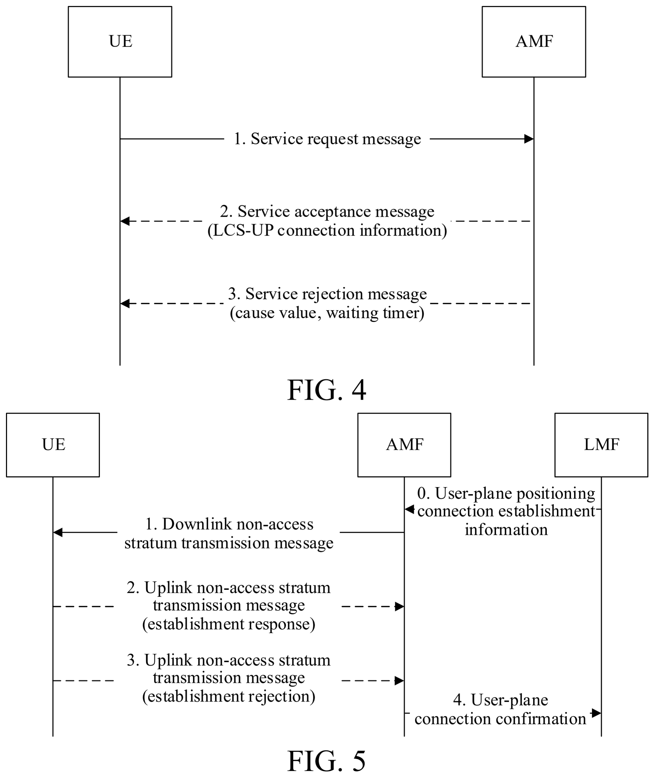

In this embodiment, a terminal initiates a connection request through a service request (service request) procedure. As shown in FIG. 4, this embodiment includes the following steps.

Step 1: A terminal sends a service request (service request) message to an AMF, where the service request message carries a terminal request type information element (UE request type IE), representing that a user-plane positioning connection is intended to be established, including, but not limited to, a user-plane positioning connection between a UE and an LMF, and a connection between a UE and an LCS client (client). For coding of the terminal request type information element, reference is made to Embodiment IV below.

Step 2/3: The AMF responses a service acceptance (service accept) message or a service reject (service reject) message to the terminal. After receiving the message in step 1, the AMF may select the LMF and then initiate a connection establishment user-plane positioning connection request to the selected LMF.

If the user-plane positioning connection is successfully established, the AMF sends a service acceptance (service accept) message to the terminal, where the service acceptance message carries LCS-UP connection information (LCS-UP connection info), and includes at least one of the following:
1) an emergency indicator (emergency or non-emergency),
2) a type (terminal initiation, network initiation, and third-party initiation),
3) a source address (IP or DNN information of a UE or an LMF or an LCS client/AF/5GC NF (for example, an NWDAF)), where the LCS client herein is a location client (Location client), and the AF is an application network element (application function). The 5GC NF is a 5GC network element unit (5 Generation core-network network function), for example, a NWDAF (Network Data Analytics Function),
4) a destination address (the LMF or the LCS client/AF/5GC NF (for example, the NWDAF), or the IP or the DNN information of a UE),
5) safety-related information,
6) an expected connection duration;
7) an effective duration;
8) a slice; and
9) a PDU session identifier (PDU session ID).

In an implementation, the LCS-UP connection information (LCS-UP connection info) may be placed in the service acceptance message as a new added information element (IE). In an implementation, the LCS-UP connection information is encrypted, and then is placed in the service acceptance message as the newly added IE.

If the connection establishment fails or the AMF cannot select an appropriate LMF, or the AMF cannot establish the user-plane positioning connection due to a reason such as congestion, the AMF sends the service reject message to the terminal. Optionally, a cause value (reject cause) (for coding, reference is made to a 5GMM cause in Embodiment IV) is carried, which represents a reject cause. Optionally, waiting time information (waiting timer) is carried, which represents that the user needs to wait for a period of time and then establishes the user-plane positioning connection request again.

### Embodiment II

In this embodiment, the AMF initiates a connection request through a new payload of a downlink non-access stratum transmission (DL NAS TRANSPORT) message. As shown in FIG. 5, this embodiment includes the following steps.

Step 0: The LMF sends user-plane positioning connection establishment information to the AMF, to indicate information required for establishing a connection, including safety information, an LMF address, and the like.

Step 1: The AMF sends the downlink non-access stratum transmission (DL NAS TRANSPORT) message to the terminal, including at least one of the following:
1) carrying first indication information, representing that a message for establishing the user-plane positioning connection is carried (an implementation is a payment container type, and for encoding, reference is made to Embodiment IV), and
2) carrying an LCS-UP payload (LCS-UP payload), used to encapsulate the user-plane positioning connection message. A plurality of message types exist in the LCS-UP payload, including an establishment request (initiation request), an establishment response (initiation response), an establishment reject (initiation reject), a modification request (modification request), modification complete (modification complete), modification reject (modification reject), cancellation complete (cancellation request), cancellation complete (cancellation complete), and cancellation reject (cancellation reject).

In this step, the message type is the establishment request (that is, request). An implementation is encapsulating in an existing payload container information element (payload container IE), or encapsulating in a new IE. For encoding, reference is made to Embodiment IV.

The AMF may further perform the first operation when sending the downlink non-access stratum transmission (DL NAS TRANSPORT) message to the terminal to establish a connection. The first operation includes at least one of the following:
1) setting a type field (type) of a header of the LCS-UP payload to an establishment request (initiation request), and
2) encapsulating the LCS-UP connection information (LCS-UP connection info) in a body of the LCS-UP payload, including at least one piece of the LCS-UP connection information in Embodiment I.

It should be noted that a current terminal needs to be in a connected (connected) mode. If the current terminal is not in the connected mode, core network paging (CN paging) is triggered, to enable the terminal to initiate a service request message to enter the connected mode.

Step 2/3: The UE sends a non-access stratum transmission (UL NAS TRANSPORT) message to the AMF, where the message includes at least one of the following:
1) carrying first indication information, representing that a message for establishing the user-plane positioning connection is carried, and an implementation is a payload container type (payload container type), and for encoding, reference is made to Embodiment IV, and
2) carrying an LCS-UP payload (LCS-UP payload), used to encapsulate the user-plane positioning connection message. In step 2, the message type is the establishment response (namely, the initiation response). In step 3, the message type is the establishment reject (namely, initiation reject). An implementation is encapsulating in an existing payload container information element (payload container IE), or encapsulating in a new IE. For encoding, reference is made to Embodiment IV.

When the terminal may establish the user-plane positioning connection, the message type is the establishment response message. In this case, the terminal performs a second operation, including:
1) setting a type field (type) of a header of the LCS-UP payload as the establishment response (initiation response), and
2) encapsulating the LCS-UP connection information (LCS-UP connection info) in a body of the LCS-UP payload, including at least one piece of the LCS-UP connection information in Embodiment I.

When the terminal cannot establish the user-plane positioning connection, the message type is the establishment reject message. In this case, the UE performs a third operation, including:
1) setting a type field (type) of a header of the LCS-UP payload as the establishment reject (initiation reject), and
2) encapsulating the LCS-UP connection information (LCS-UP connection info) in a body of the LCS-UP payload, including at least one piece of the LCS-UP connection information in Embodiment I.

Step 4: The AMF responses a confirmation message to the LMF, and if the AMF receives the message in step 2, the AMF responses that the establishment succeeds. If the AMF receives the message in step 3, the AMF responses that the establishment fails, optionally carrying a cause value (reject cause).

### Embodiment III

In this embodiment, the terminal initiates a connection request through a new payload of an uplink non-access stratum transmission (UL NAS TRANSPORT). As shown in FIG. 6, this embodiment includes the following steps.

A difference between this embodiment and Embodiment II lies in that: Embodiment II is the network-initiated user-plane positioning connection establishment, and this embodiment is the terminal-initiated user-plane positioning connection establishment.

Step 1: The terminal sends the non-access stratum transmission (UL NAS TRANSPORT) message to an AMF, carrying first indication information and an LCS-UP payload, sets a type field of a header of the LCS-UP payload as an establishment request (initiation request), and encapsulates LCS-UP connection information (LCS-UP connection info) in a body of the LCS-UP payload. An implementation is encapsulating in an existing payload container information element (payload container IE), or encapsulating in a new IE. For encoding, reference is made to Embodiment IV.

Step 2/3: The AMF responses a downlink non-access stratum transmission (DL NAS TRANSPORT) message to the terminal, and an operation performed by the AMF is similar to step 2/3 performed by the terminal in Embodiment II.

It should be noted that if the LCS-UP payload is encapsulated in a payload container (payload container), the AMF reads the LCS-UP payload information from the load container after receiving the uplink non-access stratum transmission (UL NAS TRANSPORT) message, and optionally stores the LCS-UP connection information.

### Embodiment IV

In this embodiment, coding is mainly described in a plurality of parts.
1. Modification of 5GMM cause coding:

The purpose of the 5GMM cause information element is to indicate a reason why a 5GMM request from a UE is rejected by a network (The purpose of the 5GMM cause information element is to indicate the reason why a 5GMM request from the UE is rejected by the network).

The 5GMM cause information element is coded as shown in Table 9.11.3.2.1 (The 5GMM cause information element is coded as shown in table 9.11.3.2.1).

The 5GMM cause is a type 3 information element with length of 2 octets (The 5GMM cause is a type 3 information element with length of 2 octets).

| 8 | 7 | 6 | 5 | 4 | 3 | 2 | 1 | |
|---|---|---|---|---|---|---|---|---|
| 5GMM cause IEI | | | | | | | | octet 1 |
| Cause value | | | | | | | | octet 2 |

### Table 9.11.3.2.1: 5GMM cause information element

**Table 9.11.3.2.1: 5GMM cause information element**

| Cause value (octet 2) | | | | | | | | |
|---|---|---|---|---|---|---|---|---|
| Bits | | | | | | | | |
| **8** | **7** | **6** | **5** | **4** | **3** | **2** | **1** | |
| 0 | 0 | 0 | 0 | 0 | 0 | 1 | 1 | Illegal UE |
| 0 | 0 | 0 | 0 | 0 | 1 | 0 | 1 | PEI not accepted |
| 0 | 0 | 0 | 0 | 0 | 1 | 1 | 0 | Illegal ME |
| 0 | 0 | 0 | 0 | 0 | 1 | 1 | 1 | 5GS services not allowed |
| 0 | 0 | 0 | 0 | 1 | 0 | 0 | 1 | UE identity cannot be derived by the network |
| 0 | 0 | 0 | 0 | 1 | 0 | 1 | 0 | Implicitly de-registered |
| 0 | 0 | 0 | 0 | 1 | 0 | 1 | 1 | PLMN not allowed |
| 0 | 0 | 0 | 0 | 1 | 1 | 0 | 0 | Tracking area not allowed |
| 0 | 0 | 0 | 0 | 1 | 1 | 0 | 1 | Roaming not allowed in this tracking area |
| 0 | 0 | 0 | 0 | 1 | 1 | 1 | 1 | No suitable cells in tracking area |
| 0 | 0 | 0 | 1 | 0 | 1 | 0 | 0 | MAC failure |
| 0 | 0 | 0 | 1 | 0 | 1 | 0 | 1 | Synch failure |
| 0 | 0 | 0 | 1 | 0 | 1 | 1 | 0 | Congestion |
| 0 | 0 | 0 | 1 | 0 | 1 | 1 | 1 | UE security capabilities mismatch |
| 0 | 0 | 0 | 1 | 1 | 0 | 0 | 0 | Security mode rejected, unspecified |
| 0 | 0 | 0 | 1 | 1 | 0 | 1 | 0 | Non-5G authentication unacceptable |
| 0 | 0 | 0 | 1 | 1 | 0 | 1 | 1 | N1 mode not allowed |
| 0 | 0 | 0 | 1 | 1 | 1 | 0 | 0 | Restricted service area |
| 0 | 0 | 0 | 1 | 1 | 1 | 1 | 1 | Redirection to EPC required |
| 0 | 0 | 1 | 0 | 1 | 0 | 1 | 1 | LADN not available |
| 0 | 0 | 1 | 1 | 1 | 1 | 1 | 0 | No network slices available |
| 0 | 1 | 0 | 0 | 0 | 0 | 0 | 1 | Maximum number of PDU sessions reached |
| 0 | 1 | 0 | 0 | 0 | 0 | 1 | 1 | Insufficient resources for specific slice and DNN |
| 0 | 1 | 0 | 0 | 0 | 1 | 0 | 1 | Insufficient resources for specific slice |
| 0 | 1 | 0 | 0 | 0 | 1 | 1 | 1 | ngKSI already in use |
| 0 | 1 | 0 | 0 | 1 | 0 | 0 | 0 | Non-3GPP access to 5GCN not allowed |
| 0 | 1 | 0 | 0 | 1 | 0 | 0 | 1 | Serving network not authorized |
| 0 | 1 | 0 | 0 | 1 | 0 | 1 | 0 | Temporarily not authorized for this SNPN |
| 0 | 1 | 0 | 0 | 1 | 0 | 1 | 1 | Permanently not authorized for this SNPN |
| 0 | 1 | 0 | 0 | 1 | 1 | 0 | 0 | Not authorized for this CAG or authorized for CAG cells only |
| 0 | 1 | 0 | 0 | 1 | 1 | 0 | 1 | Wireline access area not allowed |
| 0 | 1 | 0 | 0 | 1 | 1 | 1 | 0 | PLMN not allowed to operate at the present UE location |
| 0 | 1 | 0 | 0 | 1 | 1 | 1 | 1 | UAS services not allowed |
| 0 | 1 | 0 | 1 | 0 | 0 | 0 | 0 | Disaster roaming for the determined PLMN with disaster condition not allowed |
| 0 | 1 | 0 | 1 | 0 | 0 | 0 | 1 | Selected N3IWF is not compatible with the allowed NSSAI |
| 0 | 1 | 0 | 1 | 0 | 0 | 1 | 0 | Selected TNGF is not compatible with the allowed NSSAI |
| 0 | 1 | 0 | 1 | 1 | 0 | 1 | 0 | Payload was not forwarded |
| 0 | 1 | 0 | 1 | 1 | 0 | 1 | 1 | DNN not supported or not subscribed in the slice |
| 0 | 1 | 0 | 1 | 1 | 1 | 0 | 0 | Insufficient user-plane resources for the PDU session |
| 0 | 1 | 0 | 1 | 1 | 1 | 0 | 1 | Onboarding services terminated |
| 0 | 1 | 0 | 1 | 1 | 1 | 1 | 1 | Semantically incorrect message |
| 0 | 1 | 1 | 0 | 0 | 0 | 0 | 0 | Invalid mandatory information |
| 0 | 1 | 1 | 0 | 0 | 0 | 0 | 1 | Message type non-existent or not implemented |
| 0 | 1 | 1 | 0 | 0 | 0 | 1 | 0 | Message type not compatible with the protocol state |
| 0 | 1 | 1 | 0 | 0 | 0 | 1 | 1 | Information element non-existent or not implemented |
| 0 | 1 | 1 | 0 | 0 | 1 | 0 | 0 | Conditional IE error |
| 0 | 1 | 1 | 0 | 0 | 1 | 0 | 1 | Message not compatible with the protocol state |
| 0 | 1 | 1 | 0 | 0 | 1 | 1 | 0 | LCS-UP connection establishment failed (LCS-UP connection initiation failed) |
| 0 | 1 | 1 | 0 | 1 | 1 | 1 | 1 | Protocol error, unspecified |
| Any other value received by the mobile station shall be treated as 0110 1111, "protocol error, unspecified". Any other value received by the network shall be treated as 0110 1111, "protocol error, unspecified". | | | | | | | | |

### 2. Modification of terminal request type (UE request type) coding:

The purpose of the terminal request type information element is to enable a MUSIM UE to request a network to perform a specific request due to an activity on another USIM and establish a user-plane positioning connection (The purpose of the UE request type information element is to enable a MUSIM UE to request the network to perform specific requests due to activity on another USIM, and establish user plane positioning connection).

A terminal request type information element is coded as shown in Table 9.9.3.65.1 (The UE request type information element is coded as shown in table 9.9.3.65.1.).

The terminal request type is a type 4 information element with a length of 3 octets (The UE request type is a type 4 information element with a length of 3 octets).

| 8 | 7 | 6 | 5 | 4 | 3 | 2 | 1 | |
|---|---|---|---|---|---|---|---|---|
| UE request type IEI | | | | | | | | octet 1 |
| Length of UE request type contents | | | | | | | | octet 2 |
| 0 Spare | 0 Spare | LCS-UP type | | Request type | | | | octet 3 |

### Table 9.9.3.65.1: Terminal request type information element

**Table 9.9.3.65.1: Terminal request type information element**

| Request type (bits 4 to 1 of octet 3) | | | | |
|---|---|---|---|---|
| Bits | | | | |
| **4** | **3** | **2** | **1** | |
| 0 | 0 | 0 | 0 | reserved |
| 0 | 0 | 0 | 1 | NAS signalling connection release |
| 0 | 0 | 1 | 0 | Rejection of paging |

| All other values are reserved. | | | | |
|---|---|---|---|---|
| Bits | | | | |
| **6** | **5** | | | |
| **0** | **0** | Reserved | | |
| 0 | 1 | LCS-UP connection establishment request | | |
| 1 | 0 | LCS-UP connection establishment response | | |
| 1 | 1 | LCS-UP connection Initiation reject | | |
| All other values are reserved. | | | | |
| Bits 5 to 8 of octet 3 are spare and shall be coded as zero. | | | | |

### 3. Modification of payload container type (Payload container type) coding:

The purpose of the payload container type information element is to indicate a type of a payload included in the load container information element (The purpose of the Payload container type information element indicates type of payload included in the payload container information element).

A load container type information element is coded as shown in Table 9.11.3.40.1 (The Payload container type information element is coded as shown in table 9.11.3.40.1).

The load container type information element is a type 1 information element (The Payload container type information element is a type 1 information element).

| 8 | 7 | 6 | 5 | 4 | 3 | 2 | 1 | |
|---|---|---|---|---|---|---|---|---|
| Payload container type IEI | | | | Payload container type value | | | | octet 1 |

### Table 9.11.3.40.1: Payload container type information element

**Table 9.11.3.40.1: Payload container type information element**

| Payload container type value (octet 1) | | | | |
|---|---|---|---|---|
| Bits | | | | |
| **4** | **3** | **2** | **1** | |
| 0 | 0 | 0 | 1 | N1 SM information |
| 0 | 0 | 1 | 0 | SMS |
| 0 | 0 | 1 | 1 | LTE Positioning Protocol (LPP) message container |
| 0 | 1 | 0 | 0 | SOR transparent container |
| 0 | 1 | 0 | 1 | UE policy container |
| 0 | 1 | 1 | 0 | UE parameters update transparent container |
| 0 | 1 | 1 | 1 | Location services message container (see 3GPP TS 23.273 [6B]) |
| 1 | 0 | 0 | 0 | CIoT user data container |
| 1 | 0 | 0 | 1 | Service-level-AA container |
| 1 | 0 | 1 | 0 | Event notification |
| 1 | 0 | 1 | 1 | LCS user plane connection (LCS user plane connection) |
| 1 | 1 | 1 | 1 | Multiple payloads |
| All other values are reserved. | | | | |
| NOTE: The value "Multiple payloads" is only used when the Payload container contents in figure 9.11.3.39.1 contains multiple payloads as shown in figure 9.11.3.39.2. | | | | |

### 4. Newly-added LCS-UP payload (LCS-UP payload):

| Header (Header) | | Body (Body) |
|---|---|---|
| Header: | | |
| **Field (Field)** | **Role (Role)** | |
| Transaction ID | Identify messages belonging to the same transaction | |
| Acknowledgement | Enable an acknowledgement to be requested and/or returned for any LPP message | |
| Type | Indicate the type of the message: | |
| | Establishment request (initiation request), | |
| | Establishment response (initiation response), | |
| | Establishment reject (initiation reject), | |
| | Modification request (modification request), | |
| | Modification complete (modification complete), | |
| | Modification reject (modification reject), | |
| | Cancellation request (cancellation request), | |
| | Cancellation complete (cancellation complete), | |
| | Cancellation reject (cancellation reject) | |

The body (Body) includes information such as an emergency indicator (including emergency or non-emergency), a type (terminal initiation, network initiation, and third-party initiation), a source address (IP or DNN information of a UE or an LMF or an LCS client/AF/5GC NF (for example, an NWDAF)), a destination address (IP or DNN information of an LMF or an LCS client/AF/5GC NF (for example, an NWDAF) or a UE), safety-related information, an expected connection duration, an effective duration, a slice, a PDU session ID, a reject cause, or a waiting timer.

### Embodiment V

It should be noted that, in the foregoing embodiment, only a procedure for establishing a user-plane positioning connection is listed. Similarly, for a modification request, modification complete, cancellation complete, and a cancellation complete message, an initiator may be a terminal, a network, or a third party. Similar to Embodiment II and Embodiment III of the connection establishment, only message types are different. In other words, the LCS-UP payload may be used for a modification operation and a cancellation operation of the user-plane positioning connection.

The foregoing embodiments provide several feasible methods for triggering establishment, modification, and cancellation of the user-plane positioning connection, and provide actual encoding and message encapsulation methods, to establish a user-plane positioning connection service from a terminal to a network side.

Embodiments of this application are further applicable to a process of establishing the user plane positioning request from a UE to a third party such as an LCS client (LCS client) or a network data analysis function (Network Data Analytics Function, NWDAF).

The communication method for a user-plane positioning connection according to embodiments of this application is described in detail above with reference to FIG. 2 and FIG. 3. A communication method for a user-plane positioning connection according to another embodiment of this application is described in detail below with reference to FIG. 7 and FIG. 8. It may be understood that interaction between a network-side device and a terminal described on the network-side device is the same as or corresponds to that described on the terminal side in the method shown in FIG. 2 and FIG. 3. To avoid repetition, relevant descriptions are properly omitted.

FIG. 7 is a schematic flowchart of implementation of a communication method for a user-plane positioning connection according to an embodiment of this application. The method may be applied to a network-side device. This embodiment corresponds to the embodiment shown in FIG. 2. As shown in FIG. 7, the method 700 includes the following steps.

S702: The network-side device receives a first message, where the first message is related to a user-plane positioning connection, the first message is a service request message, or the first message is an uplink non-access stratum transmission message, and the uplink non-access stratum transmission message includes an LCS-UP payload.

According to the communication method for a user-plane positioning connection provided in this embodiment of this application, the network-side device receives the service request message or receives the uplink non-access stratum transmission message carrying the LCS-UP payload, to implement transmission of a message related to the user-plane positioning connection, and further implement the user-plane positioning connection establishment, the user-plane positioning connection modification, the user-plane positioning connection cancellation, or the like, thereby improving communication performance related to the user-plane positioning connection.

Optionally, in an embodiment, the service request message includes a terminal request type information element, and the terminal request type information element is configured to represent that the service request message is used to establish the user-plane positioning connection.

Optionally, in an embodiment, the terminal request type information element is configured to indicate an LCS-UP type, and the LCS-UP type includes at least one of the following: an LCS-UP connection establishment request, an LCS-UP connection establishment response, and LCS-UP connection establishment reject.

Optionally, in an embodiment, after the network-side device receives the first message, the method further includes: The network-side device sends a second message, where the second message includes a service acceptance message or a service reject message, the service acceptance message includes LCS-UP connection information, and the LCS-UP connection information represents attribute information of the user-plane positioning connection or carries a material for establishing the user-plane positioning connection. The service reject message includes at least one of the following: a 5GMM cause information element, where the 5GMM cause information element includes a cause value, and the cause value is used to indicate an LCS-UP connection establishment failure; and a fallback time information element, where the fallback time information element is configured to indicate a waiting time, and the waiting time is used to indicate that a terminal is allowed to initiate an LCS-UP connection establishment request message after the waiting time.

Optionally, in an embodiment, the LCS-UP payload includes a message type. The message type indicates one of the following: an establishment request; an establishment response; establishment reject; a modification request; modification complete; modification reject; a cancellation request; cancellation complete; and cancellation reject.

Optionally, in an embodiment, the first message further includes first indication information, and the first indication information is used to indicate that the first message carries information for establishing the user-plane positioning connection.

Optionally, in an embodiment, after the network-side device receives the uplink non-access stratum transmission message, the method further includes: The network-side device sends a downlink non-access stratum transmission message, where the downlink non-access stratum transmission message includes the LCS-UP payload.

FIG. 8 is a schematic flowchart of implementation of a communication method for a user-plane positioning connection according to an embodiment of this application. The method may be applied to a network-side device. This embodiment corresponds to the embodiment shown in FIG. 3. As shown in FIG. 8, the method 800 includes the following steps.

S802: The network-side device sends a third message, where the third message is related to a user-plane positioning connection, the third message is a downlink non-access stratum transmission message, and the downlink non-access stratum transmission message includes an LCS-UP payload.

According to the communication method for a user-plane positioning connection provided in this embodiment of this application, the network-side device sends the downlink non-access stratum transmission message carrying the LCS-UP payload, to implement transmission of a message related to the user-plane positioning connection, and further implement the user-plane positioning connection establishment, the user-plane positioning connection modification, the user-plane positioning connection cancellation, or the like, thereby improving communication performance related to the user-plane positioning connection.

Optionally, in an embodiment, the LCS-UP payload includes a message type. The message type indicates one of the following: an establishment request; an establishment response; establishment reject; a modification request; modification complete; modification reject; a cancellation request; cancellation complete; and cancellation reject.

Optionally, in an embodiment, the third message further includes first indication information, and the first indication information is used to indicate that the third message carries information for establishing the user-plane positioning connection.

Optionally, in an embodiment, the method further includes: The network-side device receives a fourth message, where the fourth message includes an establishment response message or an establishment reject message. The establishment response message includes at least one of the following: 1) first indication information, where the first indication information is used to indicate that the establishment response message carries information for establishing the user-plane positioning connection; and 2) an LCS-UP payload, where a type of a message encapsulated by the LCS-UP payload is establishment reject, and the establishment reject message includes at least one of the following: 1) the first indication information, where the first indication information is used to indicate that the establishment reject message carries information for establishing the user-plane positioning connection; and 2) the LCS-UP payload, where a type of a message encapsulated by the LCS-UP payload is establishment reject.

According to the communication method for a user-plane positioning connection provided in this application, an executive subject may be a communication apparatus for a user-plane positioning connection. In embodiments of this application, the communication apparatus for a user-plane positioning connection provided in embodiments of this application is described by using an example in which the communication apparatus for a user-plane positioning connection performs the communication method for a user-plane positioning connection.

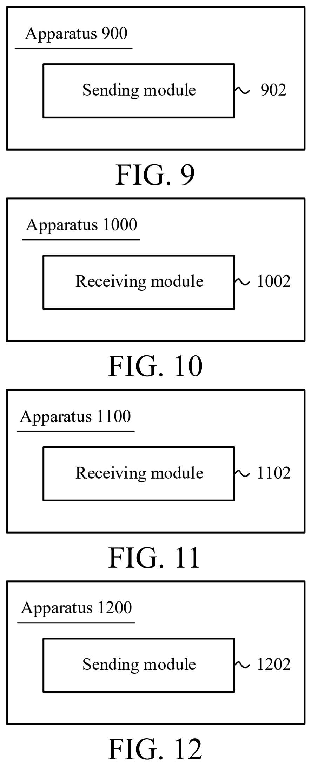

FIG. 9 is a schematic structural diagram of a communication apparatus for a user-plane positioning connection according to an embodiment of this application. The apparatus may correspond to a terminal in another embodiment. As shown in FIG. 9, the apparatus 900 includes the following modules.

A sending module 902, configured to send a first message, where the first message is related to a user-plane positioning connection, the first message is a service request message, or the first message is an uplink non-access stratum transmission message, and the uplink non-access stratum transmission message includes an LCS-UP payload.

Optionally, the apparatus 900 further includes a receiving module, a processing module, and the like.

According to the communication apparatus for a user-plane positioning connection provided in this embodiment of this application, the terminal may send the service request message or send the uplink non-access stratum transmission message carrying the LCS-UP payload, to implement transmission of a message related to the user-plane positioning connection, and further implement the user-plane positioning connection establishment, the user-plane positioning connection modification, the user-plane positioning connection cancellation, or the like, thereby improving communication performance related to the user-plane positioning connection.

Optionally, in an embodiment, the service request message includes a terminal request type information element, and the terminal request type information element is configured to represent that the service request message is used to establish the user-plane positioning connection.

Optionally, in an embodiment, the terminal request type information element is configured to indicate an LCS-UP type, and the LCS-UP type includes at least one of the following: an LCS-UP connection establishment request, an LCS-UP connection establishment response, and LCS-UP connection establishment reject.

Optionally, in an embodiment, the apparatus 900 further includes a receiving module, configured to receive a second message, where the second message includes a service acceptance message or a service reject message, the service acceptance message includes LCS-UP connection information, and the LCS-UP connection information represents attribute information of the user-plane positioning connection or carries a material for establishing the user-plane positioning connection. The service reject message includes at least one of the following: 1) a 5GMM cause information element, where the 5GMM cause information element includes a cause value, and the cause value is used to indicate an LCS-UP connection establishment failure; and 2) a fallback time information element, where the fallback time information element is configured to indicate a waiting time, and the waiting time is used to indicate that a terminal is allowed to initiate an LCS-UP connection establishment request message after the waiting time.

Optionally, in an embodiment, the LCS-UP payload includes a message type. The message type indicates one of the following: an establishment request; an establishment response; establishment reject; a modification request; modification complete; modification reject; a cancellation request; cancellation complete; and cancellation reject.

Optionally, in an embodiment, the first message further includes first indication information, and the first indication information is used to indicate that the first message carries information for establishing the user-plane positioning connection.

Optionally, in an embodiment, the LCS-UP payload includes a header and a body. The sending module 902 is further configured to set a message type field of the header of the LCS-UP payload to a first type, where the first type is used to indicate one of the following: an establishment request; an establishment response; establishment reject; a modification request; modification complete; modification reject; a cancellation request; cancellation complete; and cancellation reject; encapsulate the LCS-UP connection information in the body of the LCS-UP payload; and encapsulate the LCS-UP payload in a payload container information element or the first message.

Optionally, in an embodiment, the first indication information is included in a payload container type information element.

Optionally, in an embodiment, the apparatus 900 further includes a receiving module, configured to receive a downlink non-access stratum transmission message (DL NAS TRANSPORT), where the downlink non-access stratum transmission message includes the LCS-UP payload.

For the apparatus 900 according to this embodiment of this application, reference may be made to the process of the corresponding method 200 in embodiments of this application. In addition, the units/modules of the apparatus 900 and the foregoing other operations and/or functions are respectively intended to implement the corresponding process of the method 200, and achieve the same or equivalent technical effect. For brevity, details are not described herein again.

FIG. 10 is a schematic structural diagram of a communication apparatus for a user-plane positioning connection according to an embodiment of this application. The apparatus may correspond to a terminal in another embodiment. As shown in FIG. 10, the apparatus 1000 includes the following modules.
a receiving module 1002, configured to receive a third message, where the third message is related to a user-plane positioning connection, the third message is a downlink non-access stratum transmission message, and the downlink non-access stratum transmission message includes an LCS-UP payload.

Optionally, the apparatus 1000 further includes a sending module, a processing module, and the like.

The communication apparatus for a user-plane positioning connection provided in this embodiment of this application may receive the downlink non-access stratum transmission message carrying the LCS-UP payload, to implement transmission of a message related to the user-plane positioning connection, and further implement the user-plane positioning connection establishment, the user-plane positioning connection modification, the user-plane positioning connection cancellation, or the like, thereby improving communication performance related to the user-plane positioning connection.

Optionally, in an embodiment, the LCS-UP payload includes a message type. The message type indicates one of the following: an establishment request; an establishment response; establishment reject; a modification request; modification complete; modification reject; a cancellation request; cancellation complete; and cancellation reject.

Optionally, in an embodiment, the third message further includes first indication information, and the first indication information is used to indicate that the third message carries information for establishing the user-plane positioning connection.

Optionally, in an embodiment, the apparatus 1000 further includes a sending module, configured to send a fourth message, where the fourth message includes an establishment response message or an establishment reject message. The establishment response message includes at least one of the following: 1) first indication information, where the first indication information is used to indicate that the establishment response message carries information for establishing the user-plane positioning connection; and 2) an LCS-UP payload, where a type of a message encapsulated by the LCS-UP payload is an establishment response, and the establishment reject message includes at least one of the following: 1) the first indication information, where the first indication information is used to indicate that the establishment reject message carries information for establishing the user-plane positioning connection; and 2) the LCS-UP payload, where a type of a message encapsulated by the LCS-UP payload is establishment reject.

Optionally, in an embodiment, when the fourth message is the establishment response message, the sending module is further configured to: set a message type field of a header of the LCS-UP payload to an establishment response; encapsulate the LCS-UP connection information in a body of the LCS-UP payload; and encapsulate the LCS-UP payload in a payload container information element or the fourth message. Alternatively, when the fourth message is the establishment reject message, the sending module is further configured to: set a message type field of the header of the LCS-UP payload to establishment reject; encapsulate the LCS-UP connection information in a body of the LCS-UP payload; and encapsulate the LCS-UP payload in the payload container information element or the fourth message.

For the apparatus 1000 according to this embodiment of this application, reference may be made to the process of the corresponding method 300 in embodiments of this application. In addition, the units/modules of the apparatus 1000 and the foregoing other operations and/or functions are respectively intended to implement the corresponding process of the method 300, and achieve the same or equivalent technical effect. For brevity, details are not described herein again.

The communication apparatus for a user-plane positioning connection in embodiments of this application may be an electronic device, for example, an electronic device having an operating system, or a component in an electronic device, such as an integrated circuit or a chip. The electronic device may be a terminal, or may be another device other than the terminal. For example, the terminal may include but is not limited to the foregoing listed types of the terminal 11. The another device may be a server, a network attached storage (Network Attached Storage, NAS), or the like, which is not specifically limited in embodiments of this application.

FIG. 11 is a schematic structural diagram of a communication apparatus for a user-plane positioning connection according to an embodiment of this application. The apparatus may correspond to a network-side device in another embodiment. As shown in FIG. 11, the apparatus 1100 includes the following modules.

A receiving module 1102, configured to receive a first message, where the first message is related to a user-plane positioning connection, the first message is a service request message, or the first message is an uplink non-access stratum transmission message, and the uplink non-access stratum transmission message includes an LCS-UP payload.

Optionally, the apparatus 1100 further includes a sending module, a processing module, and the like.

The communication apparatus for a user-plane positioning connection provided in this embodiment of this application may receive the service request message or receive the uplink non-access stratum transmission message carrying the LCS-UP payload, to implement transmission of a message related to the user-plane positioning connection, and further implement the user-plane positioning connection establishment, the user-plane positioning connection modification, the user-plane positioning connection cancellation, or the like, thereby improving communication performance related to the user-plane positioning connection.

Optionally, in an embodiment, the service request message includes a terminal request type information element, and the terminal request type information element is configured to represent that the service request message is used to establish the user-plane positioning connection.

Optionally, in an embodiment, the terminal request type information element is configured to indicate an LCS-UP type, and the LCS-UP type includes at least one of the following: an LCS-UP connection establishment request, an LCS-UP connection establishment response, and LCS-UP connection establishment reject.

Optionally, in an embodiment, the apparatus 1100 further includes a sending module, configured to send a second message, where the second message includes a service acceptance message or a service reject message, the service acceptance message includes LCS-UP connection information, and the LCS-UP connection information represents attribute information of the user-plane positioning connection or carries a material for establishing the user-plane positioning connection. The service reject message includes at least one of the following: 1) a 5GMM cause information element, where the 5GMM cause information element includes a cause value, and the cause value is used to indicate an LCS-UP connection establishment failure; and 2) a fallback time information element, where the fallback time information element is configured to indicate a waiting time, and the waiting time is used to indicate that a terminal is allowed to initiate an LCS-UP connection establishment request message after the waiting time.

Optionally, in an embodiment, the LCS-UP payload includes a message type. The message type indicates one of the following: an establishment request; an establishment response; establishment reject; a modification request; modification complete; modification reject; a cancellation request; cancellation complete; and cancellation reject.

Optionally, in an embodiment, the first message further includes first indication information, and the first indication information is used to indicate that the first message carries information for establishing the user-plane positioning connection.

Optionally, in an embodiment, the apparatus 1100 further includes a sending module, configured to send a downlink non-access stratum transmission message, where the downlink non-access stratum transmission message includes the LCS-UP payload.

For the apparatus 1100 according to this embodiment of this application, reference may be made to the process of the corresponding method 700 in embodiments of this application. In addition, the units/modules of the apparatus 1100 and the foregoing other operations and/or functions are respectively intended to implement the corresponding process of the method 700, and achieve the same or equivalent technical effect. For brevity, details are not described herein again.

FIG. 12 is a schematic structural diagram of a communication apparatus for a user-plane positioning connection according to an embodiment of this application. The apparatus may correspond to a network-side device in another embodiment. As shown in FIG. 12, the apparatus 1200 includes the following modules.

A sending module 1202, configured to send a third message, where the third message is related to a user-plane positioning connection, the third message is a downlink non-access stratum transmission message, and the downlink non-access stratum transmission message includes an LCS-UP payload.

Optionally, the apparatus 1200 further includes a receiving module, a processing module, and the like.

The communication apparatus for a user-plane positioning connection provided in this embodiment of this application may send the downlink non-access stratum transmission message carrying the LCS-UP payload, to implement transmission of a message related to the user-plane positioning connection, and further implement the user-plane positioning connection establishment, the user-plane positioning connection modification, the user-plane positioning connection cancellation, or the like, thereby improving communication performance related to the user-plane positioning connection.

Optionally, in an embodiment, the LCS-UP payload includes a message type. The message type indicates one of the following: an establishment request; an establishment response; establishment reject; a modification request; modification complete; modification reject; a cancellation request; cancellation complete; and cancellation reject.

Optionally, in an embodiment, the third message further includes first indication information, and the first indication information is used to indicate that the third message carries information for establishing the user-plane positioning connection.

Optionally, in an embodiment, the apparatus 1200 further includes a receiving module, configured to receive a fourth message, where the fourth message includes an establishment response message or an establishment reject message. The establishment response message includes at least one of the following: 1) first indication information, where the first indication information is used to indicate that the establishment response message carries information for establishing the user-plane positioning connection; and 2) an LCS-UP payload, where a type of a message encapsulated by the LCS-UP payload is an establishment request, and the establishment reject message includes at least one of the following: 1) the first indication information, where the first indication information is used to indicate that the establishment reject message carries information for establishing the user-plane positioning connection; and 2) the LCS-UP payload, where a type of a message encapsulated by the LCS-UP payload is establishment reject.

For the apparatus 1200 according to this embodiment of this application, reference may be made to the process of the corresponding method 800 in embodiments of this application. In addition, the units/modules of the apparatus 1200 and the foregoing other operations and/or functions are respectively intended to implement the corresponding process of the method 800, and achieve the same or equivalent technical effect. For brevity, details are not described herein again.

The communication apparatus for a user-plane positioning connection provided in embodiments of this application can implement the processes implemented in the method embodiment, and achieve a same technical effect. To avoid repetition, details are not described herein again.

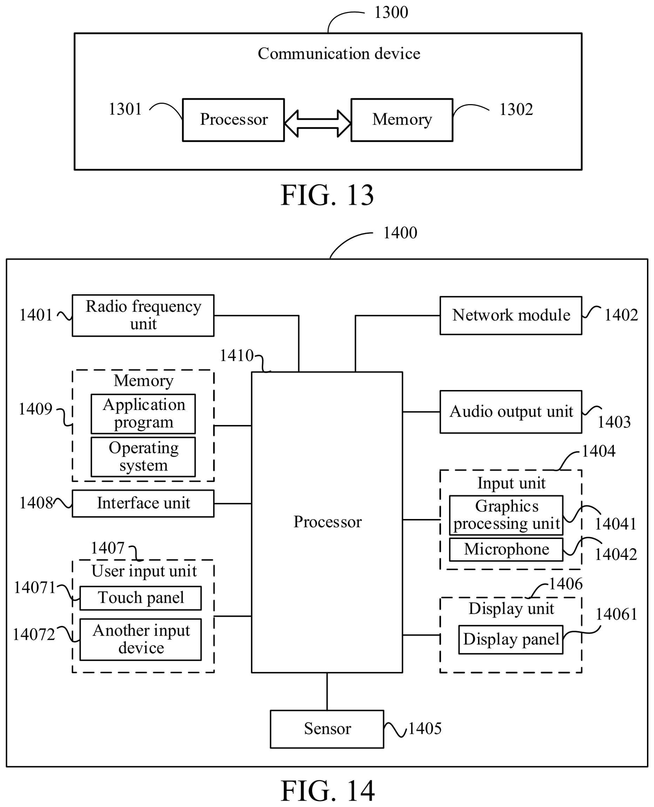

Optionally, as shown in FIG. 13, an embodiment of this application further provides a communication device 1300, including a processor 1301 and a memory 1302. The memory 1302 stores program or an instruction executable on the processor 1301. For example, when the communication device 1300 is a terminal, the program or the instruction, when executed by the processor 1301, implements the steps of the foregoing embodiment of the communication method for a user-plane positioning connection, and can achieve the same technical effects. When the communication device 1300 is a network-side device, the program or the instruction, when executed by the processor 1301, implements the steps of the foregoing embodiment of the communication method for a user-plane positioning connection, and can achieve the same technical effects. To avoid repetition, details are not described herein again.

An embodiment of this application further provides a terminal, including a processor and a communication interface. The communication interface is configured to send a first message, where the first message is related to a user-plane positioning connection, the first message is a service request message, or the first message is an uplink non-access stratum transmission message, and the uplink non-access stratum transmission message includes an LCS-UP payload. Alternatively, the communication interface is configured to receive a third message. The third message is related to a user-plane positioning connection. The third message is a downlink non-access stratum transmission message, and the downlink non-access stratum transmission message includes an LCS-UP payload. The terminal embodiment corresponds to the foregoing method embodiment of the terminal side. The implementation processes and implementations of the foregoing method embodiment are all applicable to the terminal embodiment, and can achieve the same technical effects. Specifically, FIG. 14 is a schematic diagram of a hardware structure of a terminal for implementing an embodiment of this application.

The terminal 1400 includes, but is not limited to, at least some components such as a radio frequency unit 1401, a network module 1402, an audio output unit 1403, an input unit 1404, a sensor 1405, a display unit 1406, a user input unit 1407, an interface unit 1408, a memory 1409, and a processor 1410.

A person skilled in the art may understand that the terminal 1400 may further include a power supply (for example, a battery) that supplies power to the components. The power supply may be logically connected to the processor 1410 through a power management system, thereby implementing functions such as management of charging, discharging, and power consumption through the power management system. The terminal structure shown in FIG. 14 constitutes no limitation on the terminal, and the terminal may include more or fewer components than those shown in the figure, or some merged components, or different component arrangements. Details are not described herein again.

It should be noted that in this embodiment of this application, the input unit 1404 may include a graphics processing unit (Graphics Processing Unit, GPU) 14041 and a microphone 14042. The graphics processing unit 14041 processes image data of a static picture or a video obtained by an image capture apparatus (for example, a camera) in a video capture mode or an image capture mode. The display unit 1406 may include a display panel 14061. The display panel 14061 may be configured in a form such as a liquid crystal display or an organic light-emitting diode. The user input unit 1407 includes at least one of a touch panel 14071 and another input device 14072. The touch panel 14071 is also referred to as a touchscreen. The touch panel 14071 may include two parts: a touch detection apparatus and a touch controller. The another input device 14072 may include but is not limited to a physical keyboard, a function button (such as a volume control button or a power button), a trackball, a mouse, and a joystick. Details are not described herein again.

In this embodiment of this application, the radio frequency unit 1401 receives downlink data from a network-side device and may provide the downlink data to the processor 1410 for processing. In addition, the radio frequency unit 1401 may send uplink data to the network-side device. Generally, the radio frequency unit 1401 includes, but is not limited to, an antenna, an amplifier, a transceiver, a coupler, a low noise amplifier, a duplexer, and the like.

The memory 1409 may be configured to store a software program or an instruction and various data. The memory 1409 may include mainly a first storage area for storing a program or instructions and a second storage area for storing data. The first storage area may store an operating system, an application program or an instruction required for at least one function (for example, a sound playback function and an image playback function), and the like. In addition, the memory 1409 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1409 in this embodiment of this application includes, but is not limited to, these memories and any other suitable types of memories.

The processor 1410 may include one or more processing units. Optionally, the processor 1410 integrates an application processor and a modem processor. The application processor mainly processes operations related to an operating system, a user interface, an application program, and the like. The modem processor mainly processes wireless communication signals, and is, for example, a baseband processor. It may be understood that the foregoing modem processor may alternatively not be integrated into the processor 1410.

The radio frequency unit 1401 may be configured to send a first message, where the first message is related to a user-plane positioning connection, the first message is a service request message, or the first message is an uplink non-access stratum transmission message, and the uplink non-access stratum transmission message includes an LCS-UP payload. Alternatively, the radio frequency unit 1401 is configured to receive a third message, where the third message is related to a user-plane positioning connection, the third message is a downlink non-access stratum transmission message, and the downlink non-access stratum transmission message includes an LCS-UP payload.

The terminal provided in this embodiment of this application may implement transmission of a message related to the user-plane positioning connection, and further implement the user-plane positioning connection establishment, the user-plane positioning connection modification, the user-plane positioning connection cancellation, or the like, thereby improving communication performance related to the user-plane positioning connection.

It may be understood that for an implementation process of each implementation in this embodiment, reference is made to the relevant description of the communication of the user-plane positioning connection in the method embodiments, and the same or corresponding technical effect is achieved. To avoid repetition, details are not described herein again.

An embodiment of this application further provides a network-side device, including a processor and a communication interface. The communication interface is configured to receive a first message, where the first message is related to a user-plane positioning connection, the first message is a service request message, or the first message is an uplink non-access stratum transmission message, and the uplink non-access stratum transmission message includes an LCS-UP payload. Alternatively, the communication interface is configured to send a third message. The third message is related to a user-plane positioning connection. The third message is a downlink non-access stratum transmission message, and the downlink non-access stratum transmission message includes an LCS-UP payload. This network-side device embodiment corresponds to the foregoing network-side device method embodiment. Each implementation process and implementation of the foregoing method embodiment can be applied to this network-side device embodiment, and can achieve the same technical effects.

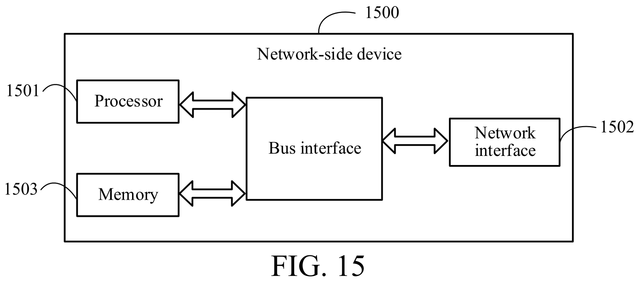

An embodiment of this application further provides a network-side device. As shown in FIG. 15, a network-side device 1500 includes a processor 1501, a network interface 1502, and a memory 1503. The network interface 1502 is, for example, a common public radio interface (common public radio interface, CPRI).

Specifically, the network-side device 1500 in this embodiment of the present invention further includes an instruction or a program stored in the memory 1503 and executable on the processor 1501. The processor 1501 calls the instruction or the program in the memory 1503 to perform the method performed by each module shown in FIG. 11 or FIG. 12, and achieves the same technical effects. To avoid repetition, details are not described herein again.

An embodiment of this application further provides a readable storage medium. The readable storage medium stores a program or an instruction. The program or the instruction, when executed by a processor, implements the processes of the foregoing embodiment of the communication method for a user-plane positioning connection, and can achieve the same technical effects. To avoid repetition, details are not described herein again.

The processor is a processor of the terminal in the foregoing embodiments. The readable storage medium may be non-volatile or non-transient. The readable storage medium includes a computer-readable storage medium, for example, a computer read-only memory ROM, a random access memory RAM, a magnetic disk, an optical disc, or the like. In some examples, the readable storage medium may be a non-transitory readable storage medium.

An embodiment of this application further provides a chip. The chip includes a processor and a communication interface, the communication interface is coupled to the processor, and the processor is configured to run the program or the instruction to implement the processes of the foregoing embodiment of the communication method for a user-plane positioning connection, and can achieve the same technical effect. To avoid repetition, details are not described herein again.

It should be understood that, the chip in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of the foregoing embodiments of the communication method for a user-plane positioning connection, and can achieve the same technical effect. To avoid repetition, details are not described herein again.

An embodiment of this application further provides a communication system for a user-plane positioning connection, including a terminal and a network-side device. The terminal may be configured to perform the steps of the foregoing communication method for a user-plane positioning connection. The network-side device may be configured to perform the steps of the foregoing communication method for a user-plane positioning connection.

It should be noted that in this specification, terms "comprise", "include" or any other variants herein are intended to encompass non-exclusive inclusion, so that a process, a method, an article, or an apparatus including a series of elements not only include those elements, but also includes another element not listed explicitly or includes intrinsic elements for the process, the method, the article, or the apparatus. Without any further limitation, an element defined by the phrase "include one □□" does not exclude existence of an additional same element in the process, the method, the article, or the apparatus that includes the element. In addition, it should be noted that the scope of the method and the apparatus in the implementations of this application is not limited to function execution in the order shown or discussed, and may further include function execution in a substantially simultaneous manner or in a reverse order based on the involved functions. For example, the described method may be performed in an order different from the described order, and various steps may also be added, omitted, or combined. In addition, features described with reference to some examples may be combined in another example.

Through the description of the foregoing implementations, a person skilled in the art may clearly understand that the foregoing method embodiments may be implemented by means of a computer software product and a necessary general hardware platform, and certainly, may alternatively be implemented by means of hardware. The computer software product is stored in a storage medium (for example, a ROM, a RAM, a magnetic disk, or an optical disc) and includes several instructions, to enable the terminal or the network-side device to perform the method in embodiments of this application.

Although embodiments of this application are described above with reference to the accompanying drawings, this application is not limited to the foregoing specific implementations. The foregoing specific implementations are illustrative only but not restrictive. With the enlightenment of this application, a person of ordinary skill in the art may make many forms of implementations without departing from the concept of this application and the protection scope of the claims. These implementations fall within the protection of this application.

## Claims

1. A communication method for a user-plane positioning connection, comprising:
sending, by a terminal, a first message, wherein the first message is related to a user-plane positioning connection; and
the first message is a service request message, or the first message is an uplink non-access stratum transmission message, and the uplink non-access stratum transmission message comprises a location service over user plane (LCS-UP) payload.

2. The method according to claim 1, wherein the service request message comprises a terminal request type information element, and the terminal request type information element is configured to represent that the service request message is used to establish the user-plane positioning connection.

3. The method according to claim 2, wherein the terminal request type information element is configured to indicate an LCS-UP type, and the LCS-UP type comprises at least one of the following:
an LCS-UP connection establishment request;
an LCS-UP connection establishment response; and
an LCS-UP connection establishment reject.

4. The method according to claim 2 or 3, wherein after the sending, by a terminal, a first message, the method further comprises:
receiving, by the terminal, a second message, wherein the second message comprises a service acceptance message or a service reject message;
the service acceptance message comprises LCS-UP connection information, and the LCS-UP connection information represents attribute information of the user-plane positioning connection or carries a material for establishing the user-plane positioning connection; and
the service reject message comprises at least one of the following:
a 5GMM cause information element, wherein the 5GMM cause information element comprises a cause value, and the cause value is used to indicate an LCS-UP connection establishment failure; and
a fallback time information element, wherein the fallback time information element is configured to indicate a waiting time, and the waiting time is used to indicate that a terminal is allowed to initiate an LCS-UP connection establishment request message after the waiting time.

5. The method according to claim 1, wherein the LCS-UP payload comprises a message type, and the message type indicates one of the following:
an establishment request; an establishment response; establishment reject; a modification request; modification complete; modification reject; a cancellation request; cancellation complete; and cancellation reject.

6. The method according to claim 5, wherein the first message further comprises first indication information, and the first indication information is used to indicate that the first message carries information for establishing the user-plane positioning connection.

7. The method according to claim 1 or 6, wherein the LCS-UP payload comprises a header and a body, and before the sending, by a terminal, a first message, the method further comprises:
setting, by the terminal, a message type field of the header of the LCS-UP payload to a first type, wherein the first type is used to indicate one of the following: an establishment request; an establishment response; establishment reject; a modification request; modification complete; modification reject; a cancellation request; cancellation complete; and cancellation reject;
encapsulating the LCS-UP connection information in the body of the LCS-UP payload; and
encapsulating the LCS-UP payload in a payload container information element or the first message.

8. The method according to claim 6, wherein the first indication information is comprised in a payload container type information element.

9. The method according to claim 1, where after the terminal sends the uplink non-access stratum transmission message, the method further comprises:
receiving, by the terminal, a downlink non-access stratum transmission message, wherein the downlink non-access stratum transmission message comprises an LCS-UP payload.

10. A communication method for a user-plane positioning connection, comprising:
receiving, by a terminal, a third message, wherein the third message is related to a user-plane positioning connection; and
the third message is a downlink non-access stratum transmission message, and the downlink non-access stratum transmission message comprises an LCS-UP payload.

11. The method according to claim 10, wherein the LCS-UP payload comprises a message type, and the message type indicates one of the following:
an establishment request; an establishment response; establishment reject; a modification request; modification complete; modification reject; a cancellation request; cancellation complete; and cancellation reject.

12. The method according to claim 11, wherein the third message further comprises first indication information, and the first indication information is used to indicate that the third message carries information for establishing the user-plane positioning connection.

13. The method according to any one of claims 10 to 12, further comprising:
sending, by the terminal, a fourth message, wherein the fourth message comprises an establishment response message or an establishment reject message;
the establishment response message comprises at least one of the following: the first indication information, wherein the first indication information is used to indicate that the establishment response message carries information for establishing the user-plane positioning connection; and the LCS-UP payload, wherein a type of a message encapsulated by the LCS-UP payload is an establishment response; and
the establishment reject message comprises at least one of the following: the first indication information, wherein the first indication information is used to indicate that the establishment reject message carries information for establishing the user-plane positioning connection; and the LCS-UP payload, wherein a type of a message encapsulated by the LCS-UP payload is establishment reject.

14. The method according to claim 13, wherein
when the fourth message is the establishment response message, the method further comprises: setting, by the terminal, a message type field of a header of the LCS-UP payload to an establishment response; and encapsulating the LCS-UP connection information in a body of the LCS-UP payload; and encapsulating the LCS-UP payload in a payload container information element or the fourth message;
or
when the fourth message is the establishment reject message, the method further comprises: setting, by the terminal, a message type field of a header of the LCS-UP payload to establishment reject; encapsulating the LCS-UP connection information in a body of the LCS-UP payload; and encapsulating the LCS-UP payload in a payload container information element or the fourth message.

15. A communication method for a user-plane positioning connection, comprising:
receiving, by a network-side device, a first message, wherein the first message is related to a user-plane positioning connection; and
the first message is a service request message, or the first message is an uplink non-access stratum transmission message, and the uplink non-access stratum transmission message comprises an LCS-UP payload.

16. The method according to claim 15, wherein the service request message comprises a terminal request type information element, and the terminal request type information element is configured to represent that the service request message is used to establish the user-plane positioning connection.

17. The method according to claim 16, wherein the terminal request type information element is configured to indicate an LCS-UP type, and the LCS-UP type comprises at least one of the following:
an LCS-UP connection establishment request;
an LCS-UP connection establishment response; and
an LCS-UP connection establishment reject.

18. The method according to claim 16 or 17, wherein after the receiving, by a network-side device, a first message, the method further comprises:
sending, by the network-side device, a second message, wherein the second message comprises a service acceptance message or a service reject message; and
the service acceptance message comprises LCS-UP connection information, and the LCS-UP connection information represents attribute information of the user-plane positioning connection or carries a material for establishing the user-plane positioning connection; and
the service reject message comprises at least one of the following:
a 5GMM cause information element, wherein the 5GMM cause information element comprises a cause value, and the cause value is used to indicate an LCS-UP connection establishment failure; and
a fallback time information element, wherein the fallback time information element is configured to indicate a waiting time, and the waiting time is used to indicate that a terminal is allowed to initiate an LCS-UP connection establishment request message after the waiting time.

19. The method according to claim 15, wherein the LCS-UP payload comprises a message type, and the message type indicates one of the following:
an establishment request; an establishment response; establishment reject; a modification request; modification complete; modification reject; a cancellation request; cancellation complete; and cancellation reject.

20. The method according to claim 19, wherein the first message further comprises first indication information, and the first indication information is used to indicate that the first message carries information for establishing the user-plane positioning connection.

21. The method according to claim 15, wherein after the receiving, by the network-side device, the uplink non-access stratum transmission message, the method further comprises:
sending, by the network-side device, a downlink non-access stratum transmission message, wherein the downlink non-access stratum transmission message comprises the LCS-UP payload.

22. A communication method for a user-plane positioning connection, comprising:
sending, by a network-side device, a third message, wherein the third message is related to a user-plane positioning connection; and
the third message is a downlink non-access stratum transmission message, and the downlink non-access stratum transmission message comprises an LCS-UP payload.

23. The method according to claim 22, wherein the LCS-UP payload comprises a message type, and the message type indicates one of the following:
an establishment request; an establishment response; establishment reject; a modification request; modification complete; modification reject; a cancellation request; cancellation complete; and cancellation reject.

24. The method according to claim 23, wherein the third message further comprises first indication information, and the first indication information is used to indicate that the third message carries information for establishing the user-plane positioning connection.

25. The method according to any one of claims 22 to 24, further comprising:
receiving, by the network-side device, a fourth message, wherein the fourth message comprises an establishment response message or an establishment reject message;
the establishment response message comprises at least one of the following: the first indication information, wherein the first indication information is used to indicate that the establishment response message carries information for establishing the user-plane positioning connection; and the LCS-UP payload, wherein a type of a message encapsulated by the LCS-UP payload is an establishment request; and
the establishment reject message comprises at least one of the following: the first indication information, wherein the first indication information is used to indicate that the establishment reject message carries information for establishing the user-plane positioning connection; and the LCS-UP payload, wherein a type of a message encapsulated by the LCS-UP payload is establishment reject.

26. The method according to claim 4, 7, 14, or 18, wherein the LCS-UP connection information comprises at least one of the following:
an emergency indicator;
a type, wherein the type comprises terminal initiation, network initiation, or third-party initiation;
a source address;
a destination address;
safety-related information;
an expected connection duration;
an effective duration;
a slice;
a PDU session identifier;
a reject cause value; and
a waiting timer.

27. A communication apparatus for a user-plane positioning connection, comprising:
a sending module, configured to send a first message, wherein the first message is related to a user-plane positioning connection; and
the first message is a service request message, or the first message is an uplink non-access stratum transmission message, and the uplink non-access stratum transmission message comprises an LCS-UP payload.

28. A communication apparatus for a user-plane positioning connection, comprising:
a receiving module, configured to receive a third message, wherein the third message is related to a user-plane positioning connection; and
the third message is a downlink non-access stratum transmission message, and the downlink non-access stratum transmission message comprises an LCS-UP payload.

29. A communication apparatus for a user-plane positioning connection, comprising:
a receiving module, configured to receive a first message, wherein the first message is related to a user-plane positioning connection; and
the first message is a service request message, or the first message is an uplink non-access stratum transmission message, and the uplink non-access stratum transmission message comprises an LCS-UP payload.

30. A communication apparatus for a user-plane positioning connection, comprising:
a sending module, configured to send a third message, wherein the third message is related to a user-plane positioning connection; and
the third message is a downlink non-access stratum transmission message, and the downlink non-access stratum transmission message comprises an LCS-UP payload.

31. A terminal, comprising a processor and a memory, wherein the memory stores a program or an instruction executable in the processor, and the program or the instruction, when executed by the processor, implements the steps of the method according to any one of claims 1 to 14.

32. A network-side device, comprising a processor and a memory, wherein the memory stores a program or an instruction executable in the processor, and the program or the instruction, when executed by the processor, implements the steps of the method according to any one of claims 15 to 25.

33. A readable storage medium, storing a program or an instruction, wherein the program or the instruction, when executed by a processor, implements the steps of the method according to any one of claims 1 to 25.

34. A chip, comprising a processor and a communication interface, wherein the communication interface is coupled to the processor, and the processor is configured to run a program or an instruction to implement the communication method for a user-plane positioning connection according to any one of claims 1 to 25.

35. A computer program product, stored in a non-volatile memory, wherein the computer program product is executed by at least one processor to implement the communication method for a user-plane positioning connection according to any one of claims 1 to 25.
